# EUROPÄISCHE PATENTSCHRIFT

(11) **EP 1 529 439 B1**
(45) Veröffentlichungstag und Bekanntmachung des Hinweises auf die Patenterteilung: **14.02.2007**
(21) Anmeldenummer: 04022584.9
(22) Anmeldetag: 22.09.2004
(51) Int. Cl.: A01K 61/02

(54) **Versorgungseinheit für ein Aquarium**
Aquarium feed unit
Unité d'alimentation pour un aquarium

(30) Priorität: 06.11.2003 DE 10351860
(43) Veröffentlichungstag der Anmeldung: 11.05.2005
(73) Patentinhaber: EADS Space Transportation GmbH, 28199 Bremen (DE)
(72) Erfinder: Franz, Markus, 92262 Birgland (DE); Horn, Eberhard, Dr., 89143 Blaubeuren (DE); Schwarzwälder, Achim, 88090 Immenstaad (DE); Hiesgen, Norbert, 88682 Salem (DE); Kübler, Ulrich, 88677 Markdorf (DE)
(74) Vertreter: Meel, Thomas

(56) Entgegenhaltungen:
- EP-A- 0 619 070
- WO-A-98/37959
- US-A- 5 221 278

## Beschreibung

Die Erfindung betrifft eine Versorgungseinheit für ein System zur Haltung von aquatischen Kleinlebewesen, im weiteren als Aquarium bezeichnet.

Bekannt ist ein Aquarium nach der **DE 197 17 408 A1.** Derartige Aquarien wurden in miniaturisierter Form für wissenschaftliche Experimente im Weltraum genutzt, z.B. an Bord von Flug STS84 des US-Space Shuttles (1997). Die Dauer derartiger Missionen ist gegenwärtig auf 10 Tage beschränkt, da die Versuchsorganismen in dem bekannten Aquarium im All nicht mit Futter versorgt werden können.

In der WO 98/37959 A ist eine gattungsgemäße Versorgungseinheit mit einem geschlossenen Flüssigkeitskreislauf für die Aquarienflüssigkeit beschrieben, mit der durch eine osmotische Pumpe Flüssigfutter in den Flüssigkeitskreislauf gegeben werden kann.

Es ist Aufgabe der Erfindung, eine raumfahrttaugliche Versorgungseinheit für ein Aquarium zu schaffen, mit der eine automatische Fütterung der im Aquarium befindlichen Lebewesen ermöglicht wird. Wichtig hierbei ist, dass die Futterzugabe bei festgelegten, definierten Mengen erfolgt, um einerseits die Unterversorgung der Organismen zu vermeiden, andererseits eine Vergiftung des Aquarienwassers durch übermäßige Futterzugabe (Zersetzung von Futterresten) zu vermeiden.

Diese Aufgabe wird mit der Versorgungseinheit nach Patentanspruch 1 gelöst. Vorteilhafte Ausführungen der Erfindung sind Gegenstand weiterer Ansprüche.

Mit der erfindungsgemäßen Versorgungseinheit wird eine automatische Fütterung der im Aquarium befindlichen Lebewesen mit definierter Futterzugabe erreicht. Sie arbeitet autonom, d.h. ohne äußeren Regelmechanismus, Überwachungssensoren etc.

Weitere Vorteile der Erfindung sind:

Aquarium und Versorgungseinheit zusammen bilden ein modulares System, das einen einfachen Austausch von Komponenten ohne in den Lebensraum der Organismen einzugreifen ermöglicht.

Seine Funktion ist unabhängig von der Schwerkraft.

Die spezifischen Anforderungen für den Einsatz in der Schwerelosigkeit, insbesondere
- Vermeidung von Lufteinschlüssen (Blasen)
- Keine offenen Phasengrenze Wasser/Luft
- zuverlässige Futterzugabe
sind erfüllt.

Den Qualitäts- und Sicherheitsstandards der Raumfahrttechnik kann entsprochen werden.

Betrieb bei kleinsten Volumina von ca. 40 ml Gesamtvolumen des Aquariums ist möglich.

Es handelt sich um ein abgeschlossenes Flüssigkeitssystem ohne Wasserwechsel. Die Wasserqualität kann durch Filter (mechanisch und chemisch/adsorptiv) sowie biologisch durch Einsatz von Bakterien zur Aufrechterhaltung des biologischen Gleichgewichts in vorgegebenen Grenzen gehalten werden.

Eine ausreichende Durchmischung des gesamten Wasservolumens ohne Todzonen ist gewährleistet.

Der Energieverbrauch ist minimal. Es muss lediglich eine Umwälzpumpe mit elektrischer Energie betrieben werden.

Die Erfindung wird anhand von Ausführungsbeispielen unter Bezugnahme auf Fig. näher erläutert. Es zeigen:
Fig. 1 eine erfindungsgemäße Versorgungseinheit in schematischer Darstellung;
Fig. 2 eine erfindungsgemäße Versorgungseinheit in 3D-Darstellung;
Fig. 3 eine in der erfindungsgemäßen Versorgungseinheit eingesetzte osmotische Pumpe.

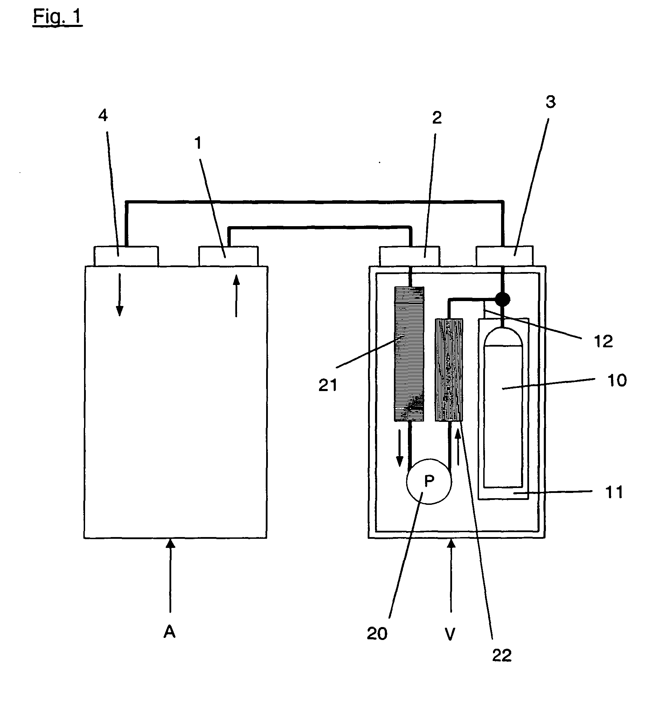

Fig. 1 zeigt eine Ausführung der erfindungsgemäßen Versorgungseinheit V in schematischer Darstellung. Bezugszeichen A bezeichnet das Aquarium, in dem sich Aquarienflüssigkeit (üblicherweise Wasser) sowie aquatische Lebewesen befinden. Der Abfluss 1 des Aquariums A ist mit den Eingang 2 der erfindungsgemäßen Versorgungseinheit V verbunden. Der Zufluss 3 des Aquariums ist mit dem Ausgang 3 der Versorgungseinheit V verbunden. Es entsteht somit über die Versorgungseinheit ein geschlossener Kreislauf der Aquarienflüssigkeit. Die Umwälzung erfolgt mittels der Pumpe 20 innerhalb der Versorgungseinheit V. Sie ist vorteilhaft als Peristaltikpumpe ausgebildet.

Zur Reinigung des Aquarienwassers sind in den Flüssigkeitskreislauf mehrere Filter 21,22 integriert. Bezugsziffer 21 bezeichnet eine mechanischen Filter, also einen Filter, der aufgrund seiner Struktur (Maschen, Poren) Partikel ab einer bestimmten Größe nicht passieren lässt. In diesen mechanischen Filtern wird der grobe Schmutz entfernt. Es können handelsübliche Aquarien-Filterschäume und/oder Filterwatte verwendet werden.

Feinstpartikel werden in einem chemisch/adsorptiven Filter entfernt. Dieser nimmt aufgrund seiner porösen Struktur Molekül- und Ionenverbindungen auf und speichert sie für längere Zeit. Hier kann z.B. Aktivkohle verwendet werden, die eine große Menge der hier relevanten giftigen Substanzen (insbesondere Nitrit, Nitrat) aufnehmen kann. Auch Zeolithe können eingesetzt werden.

Darüber hinaus werden als biologische Filter nitrifizierende Bakterienkulturen und Mikroorganismen in das Aquarium eingebracht, die durch ihre Aktivitäten den Stickstoffkreislauf beeinflussen. Sie sind verantwortlich für die Umwandlung des giftigen Ammonium/Ammoniaks zu Nitrit und Nitrat. Darüber hinaus sorgen sie für den Abbau von Futterresten, Pflanzenabfällen und Ausscheidungsprodukten der Aquarienbewohner.

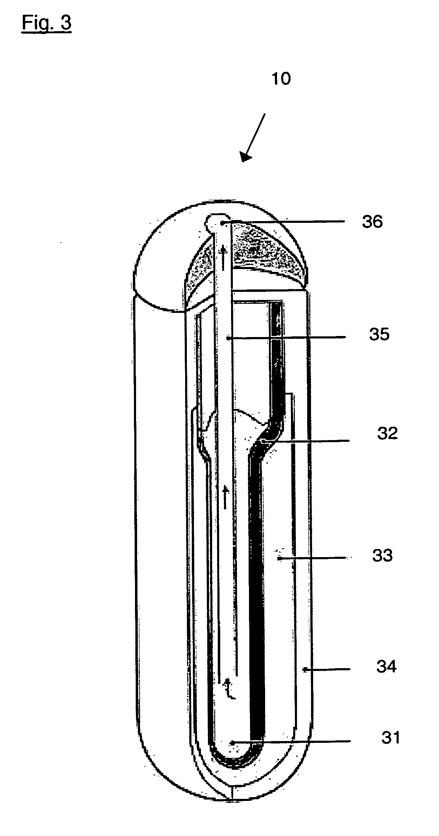

Die Zugabe von flüssigem Futtermittel in den Flüssigkeitskreislauf erfolgt mittels einer osmotischen Pumpe 10, deren Ausgang mit dem Flüssigkeitskreislauf verbunden ist. Die osmotische Pumpe ist in einem Wasserbad 11 angeordnet. Die Funktionsweise der osmotischen Pumpe 10 wird anhand Fig. 3 erläutert. Sie zeigt eine 3D-Schnittdarstellung einer kommerziell erhältlichen Pumpe (Fa. ALZET). Derartige Pumpen werden insbesondere in der medizinischen Therapie eingesetzt.

Sie umfasst die folgenden Kammern sowie diese trennenden Wände. Diese sind (von außen nach innen)
1. Zentrales Reservoir 31, welches gemäß der Erfindung mit Flüssigfutter gefüllt ist.
2. Undurchlässige und elastische Innenwand 32.
3. Kammer 33 für einen osmotischen Wirkstoff (z.B. hoch konzentrierte NaCl-Lösung).
4. Außenwand 34, ausgebildet als verformungssteife, semipermeable Membran, die die Flussrate der Pumpe bestimmt.

Der osmotische Wirkstoff nimmt das durch die semipermeable Membran 34 hindurch tretende Wasser aus dem Wasserbad 11 (Fig. 1), welches die Pumpe umgibt, kontinuierlich auf. Es entsteht zwischen der elastischen Innenwand 32 und der steifen osmotischen Außenwand 34 ein Druck, der sich durch Verformung der flüssigkeitsundurchlässigen Innenwand 32 abbaut. Dadurch wird Flüssigfutter des zentralen Reservoirs 31 aus diesem herausgefördert und in den Kreislauf der Aquarienflüssigkeit abgegeben. Das Futtermittel verlässt das Reservoir 31 über eine innerhalb des Reservoirs axial angeordnete Kanüle 35, die zum Ausgang 36 der Pumpe führt. Die Kanüle unterstützt den konstanten Fluss des Futtermittels aus dem Reservoir 31 heraus.

Insgesamt wird die zeitlich konstante Flüssigkeitsaufnahme des Natriumchlorids über einen kontinuierlichen und zeitlich konstanten Fluss des Futtermittels in den Flüssigkeitskreislauf ausgeglichen. Auf diese Weise kann (bei gleichzeitiger konstanter Umwälzung des Flüssigkeitskreislaufs durch die Pumpe 20) eine konstante Futterrate erzielt werden.

Neben diesem kontinuierlichen Betrieb der Versorgungseinheit zur Erzielung einer konstanten Futterrate ist alternativ auch ein diskontinuierlicher Betrieb möglich, bei der die Futterzugabe pulsartig in größeren Mengen innerhalb eines kurzen Zeitintervalls erfolgt.
Dieser wird dadurch erreicht, dass die Umwälzpumpe 20 nur zu bestimmten, kurzen Intervallen eingeschaltet wird, in denen die Fütterung erfolgt. Dagegen wird der kontinuierliche Betrieb der osmotischen Pumpe 10 über die gesamt Zeit aufrechterhalten. In der vorhergehenden Betriebsphase, in der die Umwälzpumpe 20 ausgeschaltet war, hat sich am Ausgang der osmotischen Pumpe 10 Flüssigfutter angesammelt, das nach dem Einschalten der Umwälzpumpe über den Flüssigkeitskreislauf in das Aquarium A transportiert wird. Es wird somit eine pulsartige Fütterung erreicht, deren Zeitpunkt z.B. durch eine Zeitschaltuhr festgelegt werden kann.
Um eine ausreichende Durchmischung der Aquarienflüssigkeit zu gewährleisten, muss in dem beschriebenen diskontinuierlichen Betrieb die Pumpe 20 in zusätzlichen Intervallen in Betrieb gesetzt werden. Diese Durchmischungsintervalle (in der Regel mehr als eine Stunde) sind wesentlich länger als die reinen Fütterungsintervalle.

Die Pumpenleistung der osmotischen Pumpe 10 wird vollständig ohne externe Energie aufgebracht. Ein weiterer Vorteil ist der geringe Bauaufwand.

Der kontinuierliche Transport des Wassers durch die Membran 34 hindurch führt zu einem Druckunterschied zwischen dem die Pumpe umgebenden Wasserbad 11 und dem Futterreservoir 31 im Innern der osmotischen Pumpe 10. Dies führt zu einer Änderung der Futterrate über der Zeit. Um dies zu verhindern, ist eine Ausgleichsnut vorhanden, die ein Wasserzufluss aus dem Flüssigkeitskreislauf in das Wasserbad 11 sichergestellt.

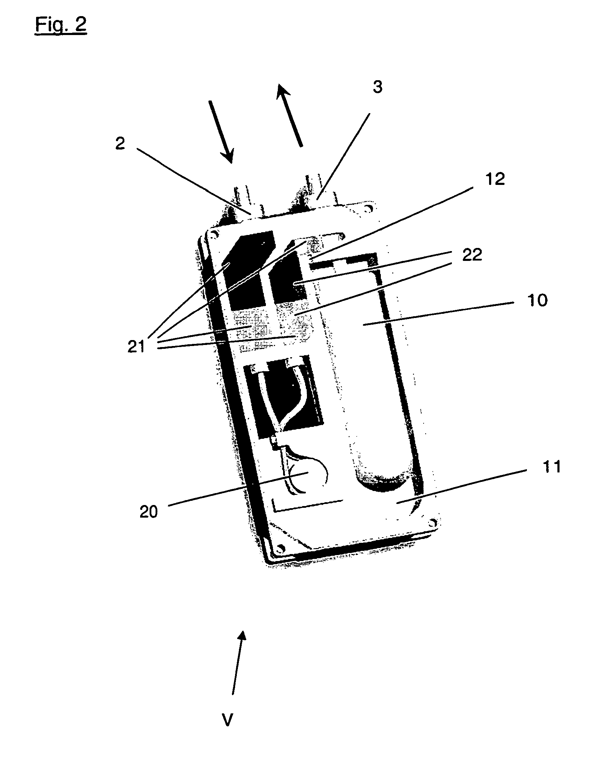

Fig. 2 zeigt eine konkrete Ausführung der Erfindung, wie sie für die Anwendung in der Raumfahrt vorgesehen ist. Für sich entsprechende Bauteile wurden die gleichen Bezugsziffern verwendet wie in Fig. 1.

Ein wesentlicher Vorteil der Erfindung ist, dass Aquarium und Versorgungseinheit ein modulares System bilden. Durch Auswechseln der Versorgungseinheit, vorteilhaft unter Einsatz selbstdichtender Schnellkupplungen, kann die Dauer der Lebenserhaltung verlängert werden.

## Patentansprüche

1. Versorgungseinheit (V) für ein Aquarium (A), umfassend
- einen mit einem Abfluss (1) des Aquariums (A) zu verbindenden Eingang (2) sowie einen mit einem Zufluss (4) des Aquariums (A) zu verbindenden Ausgang (3), derart dass ein geschlossener Flüssigkeitskreislauf für die Aquarienflüssigkeit hergestellt wird,
- eine osmotische Pumpe (10), deren Ausgang (36) mit dem Flüssigkeitskreislauf kommuniziert, wobei ein mit dem Ausgang (36) der osmotischen Pumpe (10) kommunizierendes Reservoir (31) der osmotischen Pumpe (10) Flüssigfutter für die im Aquarium (A) befindlichen Lebewesen enthält, wobei das Flüssigfutter aufgrund des in der Pumpe (10) durch Osmose erzeugten Drucks in den Flüssigkeitskreislauf gedrückt wird,
**dadurch gekennzeichnet, dass**
- die osmotische Pumpe (10) in einem Lösungsmittelbad (11) angeordnet ist,
- eine Pumpe (20) zur Umwälzung der Aquarienflüssigkeit in dem geschlossenen Flüssigkeitskreislauf vorhanden ist,
- eine in den Flüssigkeitskreislauf integrierte Filtereinheit (21,22) zur Reinigung der umgewälzten Aquarienflüssigkeit vorhanden ist,
- zwischen dem Flüssigkeitskreislauf und dem Lösungsmittelbad (11) Mittel (12) zum Druck- und Volumenausgleich vorhanden sind.

2. Versorgungseinheit nach Anspruch 2, **dadurch gekennzeichnet, dass** die Filtereinheit einen mechanischen (21) und/oder einen chemisch absorptiven Filter (22) umfasst.

## Claims

1. Supply unit (V) for an aquarium (A), comprising
- an inlet (2) to be connected to an outflow (1) of the aquarium (A) and an outlet (3) to be connected to an inflow (4) of the aquarium (A), such that a closed liquid circulation circuit for the aquarium liquid is produced,
- an osmotic pump (10), the outlet (36) of which communicates with the liquid circulation circuit, a reservoir (31) of the osmotic pump (10) which communicates with the outlet (36) of the osmotic pump (10) containing liquid feed for the living things located in the aquarium (A), the liquid feed being pressed into the liquid circulation circuit on account of the pressure generated in the pump (10) by osmosis,
**characterized in that**
- the osmotic pump (10) is arranged in a solvent bath (11),
- a pump (20) for circulating the aquarium liquid is present in the closed liquid circulation circuit,
- a filter unit (21, 22), integrated into the liquid circulation circuit, is present for purifying the circulated aquarium liquid,
- means (12) for pressure and volume equalization are present between the liquid circulation circuit and the solvent bath (11).

2. Supply unit according to Claim 1, **characterized in that** the filter unit comprises a mechanical (21) and/or chemically absorptive (22) filter.

## Revendications

1. Unité d'alimentation (V) pour un aquarium (A), comportant
- une entrée (2) à relier à une évacuation (1) de l'aquarium (A) ainsi qu'une sortie (3) à relier à une arrivée (4) de l'aquarium (A), de sorte qu'un circuit fermé de liquide soit réalisé pour le liquide de l'aquarium,
- une pompe osmotique (10), dont la sortie (36) communique avec le circuit de liquide, un réservoir (31) de la pompe osmotique (10) communiquant avec la sortie (36) de la pompe osmotique (10) et renfermant un aliment liquide destiné aux organismes vivants qui se trouvent dans l'aquarium (A), l'aliment liquide étant injecté dans le circuit de liquide suite à la pression générée par osmose dans la pompe (10),
**caractérisée en ce que**
- la pompe osmotique (10) est disposée dans un bain de solution (11),
- une pompe (20) destinée à faire circuler le liquide de l'aquarium se trouve dans le circuit fermé de liquide,
- une unité de filtres (21, 22) intégrée dans le circuit de liquide destinée à épurer le liquide de l'aquarium en circulation se trouve dans l'unité d'alimentation,
- des moyens (12) pour équilibrer la pression et le volume se trouvent entre le circuit de liquide et le bain de solution (11).

2. Unité d'alimentation selon la revendication 1, **caractérisée en ce que** l'unité de filtres comporte un filtre mécanique (21) et/ou un filtre absorbant chimiquement (22).
